# EUROPEAN PATENT APPLICATION

(11) **EP 0 744 377 A1**
(43) Date of publication of application: **27.11.1996**
(21) Application number: 96420189.1
(22) Date of filing: 24.05.1996
(51) Int. Cl.: C01B 17/04

(54) **Sulfur recovery enhanced by oxygenenriched gas supplied by gas separation membranes**

(30) Priority: 26.05.1995 US 451833
(71) Applicant: MG GENERON, INC., Malvern, Pennsylvania 19355 (US)
(72) Inventor: Nasato, Elmo, Tyler, Texas 75701 (US); Harrison, John Michael, Houston, Texas 77069 (US)
(74) Representative: Poncet, Jean-François

(57) **Abstract**

Sulfur recovery processes are supplied with oxygen-enriched air (74) obtained by passing atmospheric air (76) through gas separation membranes (75). The oxygen-enriched air (74) is used in any portion of the process where combustion occurs, including the initial Claus reaction furnace (11), fuel-fired or acid gas-fired reheaters (20, 21, 22, 93, 94, 95), tail gas incinerators (96), incinerators in tail gas cleanup units, or two or more of these locations at once. The use of membranes rather than other means of achieving oxygen enrichment reduces certain risks of accidental increases in the oxygen content and provides an easily maintained and transported source of oxygen at low cost.

## Description

This invention relates to sulfur recovery and to the use of gas separation membranes, and resides in a unique combination of these two heretofore uncombined technologies.

### BACKGROUND OF THE INVENTION

The Claus process is widely used throughout the world for removing sulfur from gas streams to render the gas streams suitable for industrial use or disposal in an environmentally acceptable manner and to recover useful sulfur. The principal uses of the process and its many variations are the treatment of sour natural gas extracted from natural gas fields and the treatment of gases emitted from petroleum refineries.

Traditionally used with air as the oxidant in the initial combustion stage, the Claus process is limited in its efficiency by its throughput rate, and the factor most responsible for this limitation is the large amount of air needed to supply the stoichiometric amount of oxygen. For any given plant, the efficiency at the maximum throughput rate would obviously be improved by substituting oxygen or an oxygen-enriched gas for air. Other benefits known to be obtainable from the use of an oxygen-enriched gas include a higher flame temperature and increased flame stability in the reaction furnace, increased conversion of sulfur in the reaction furnace both due to the higher temperature and to higher partial pressures of the H₂S and SO₂ reactants, greater destruction of contaminants such as ammonia, cyanic acid, and hydrocarbons, and reduced duty requirements in the condensation and reheat stages.

Oxygen enrichment has been achieved by combining air with pure or highly concentrated oxygen, the latter drawn either from a liquid oxygen source or from gaseous oxygen, or by simply using the oxygen from one of these sources alone. One disadvantage of using pure oxygen from a liquid or gaseous supply is the expense of the supply, and the need to replenish it for continuous use in the process. Another is the danger involved in storing and transporting pure or highly concentrated oxygen. A danger also exists in the Claus process itself, since the concentration of oxygen entering the furnace must be controlled to avoid excessive temperatures and the resultant damage to the refractory lining of the furnace, the pipelines, heat exchange units and other parts of the plant. Failure of the air blowers, blockage of the air lines, or malfunctioning of the valves can result in sudden or uncontrollable increases in the proportion of the oxygen entering the process.

Claus processes would therefore benefit from a means of supplying oxygen-enriched air that has little or no risk of the escape of pure oxygen, or of accidental increases in the proportion of oxygen being fed, and that can be installed in remote locations without the need to transport liquified oxygen or compressed gaseous oxygen or to continuously replenish an on-site source of supply.

### SUMMARY OF THE INVENTION

These and other benefits are achieved by the present invention, which resides in the use of a gas separation membrane system to generate an oxygen-rich gas stream from air for use as the combustion medium in a Claus reaction furnace, or in any of various locations or units in a Claus plant where combustion occurs. The membrane is one which preferentially passes oxygen relative to nitrogen, and can be used in any of the various forms in which the membrane technology has been developed. Hollow fiber membranes of a bisphenol polycarbonate, most notably tetrabromobisphenol A polycarbonate, are of particular interest, and the membranes are preferably used in modules, each containing a bundle of fibers to provide a large surface area for oxygen permeability and flow passages for the separate removal of permeate and non-permeated remainder portions. Banks of modules are arranged in parallel to provide the volumetric flow needed for the Claus process. Modules can also be arranged in series to provide further treatment of the non-permeated remainder portion to further deplete that portion of oxygen and thereby provide a gas stream with high levels of nitrogen for use on-site or elsewhere in unrelated industrial processes.

The level of oxygen enrichment achieved in accordance with this invention can be varied by combining the membrane permeate with air in selected proportions. The maximum concentration is readily limited, however, by the structure, quantity and arrangement of membranes themselves. Failure of the membrane system will only result in a decrease in the oxygen content of the emerging stream. Any of various known modifications in the Claus process can be incorporated to accommodate the process to the different oxygen levels which can be provided by the membrane system.

These and other features and advantages of the invention will become apparent from the description which follows.

### BRIEF DESCRIPTION OF THE DRAWINGS

FIG. **1** is a process flow diagram of a Claus sulfur recovery plant, utilizing oxygen-enriched air supplied in accordance with the present invention.

FIG. **2** is a process flow diagram of a modification of the Claus plant of FIG. **1**, again utilizing oxygen-enriched air supplied in accordance with the present invention.

FIG. **3** is a process flow diagram of a further modification of the Claus plant of FIG. **1**, again utilizing oxygen-enriched air supplied in accordance with the present invention.

FIG. **4** is a process flow diagram of a tail gas cleanup unit for use in conjunction with a Claus plant, the cleanup unit utilizing oxygen-enriched air supplied in accordance with the present invention.

### DETAILED DESCRIPTION OF THE INVENTION AND PREFERRED EMBODIMENTS

Membranes and membrane systems for the separation of oxygen and nitrogen in an air stream are well known and widely varied. Any such systems will be suitable for use in the present invention. Examples of the various polymers from which these membranes are made are polyimides, copolyimides, polyamides, polyarylates, poly-4-methyl-1-pentene, polytrimethylsilylpropyne, asymmetric polysulfones, bis A-polysulfones, and bisphenol polycarbonates. Descriptions of the some of these polymers and the membranes formed from them are found in the following patents, listed by assignee:

Air Products and Chemicals, Inc., Allentown, Pennsylvania, USA:
Rao, *et al.,* U.S. Patent No. 5,104,425 (April 14, 1992); Anand, *et al.,* U.S. Patent No. 5,073,175 (December 17, 1991), Burgoyne, Jr., *et al.,* U.S. Patent No. 5,061,298 (October 29, 1991); Meier, *et al.,* U.S. Patent No. 5,045,093 (September 3, 1991); Sorensen, U.S. Patent No. 5,043,067 (August 27, 1991); Meier, *et al.,* U.S. Patent No. 5,042,993 (August 27, 1991); Tien, *et al.,* U.S. Patent No. 5,034,027 (July 23, 1991); Anand, *et al.,* U.S. Patent No. 5,013,338 (May 7, 1991); Surnamer, *et al.,* U.S. Patent No. 5,013,332 (May 7, 1991); *Angus, et al.,* U.S. Patent No. 5,009,679 (April 23, 1991); Tien, *et al.,* U.S. Patent No. 5,007,945 (April 16, 1991); DiMartino, Sr., *et al.,* U.S. Patent No. 5,006,132 (April 9, 1991);

Permea, Inc., St. Louis, Missouri, USA:
Rice, *et al.,* U.S. Patent No. 5,030,251 (July 9, 1991); Malon, *et al.,* U.S. Patent No. 5,013,767 (May 7, 1991); Malon, *et al.,* U.S. Patent No. 4,992,221 (February 12, 1991);

Union Carbide Industrial Gases Technology Corporation, Danbury, Connecticut, USA:
Prasad, *et al.,* U.S. Patent No. 5,122,355 (June 16, 1992); Prasad, *et al.,* U.S. Patent No. 5,102,432 (April 7, 1992); Prasad, *et al.,* U.S. Patent No. 5,084,073 (January 28, 1992); Schaub, U.S. Patent No. 5,077,029 (December 31, 1991); Bikson, *et al.,* U.S. Patent No. 5,071,448 (December 10, 1991); Bikson, *et al.,* U.S. Patent No. 5,067,971 (November 26, 1991); Kawakami, *et al.,* U.S. Patent No. 5,055,114 (October 8, 1991); Handley, U.S. Patent No. 5,041,149 (August 20, 1991); Bikson, *et al.,* U.S. Patent No. 5,026,479 (June 25, 1991); Haas, *et al.,* U.S. Patent No. 5,004,482 (April 2, 1991); Kawakami, *et al.,* U.S. Patent No. 4,994,095 (February 19, 1991);

E.I. duPont de Nemours & Company, Wilmington, Delaware, USA:
Ekiner, *et al.,* U.S. Patent No. 5,085,676 (February 4, 1992); Feiring, *et al.,* U.S. Patent No. 5,084,548 (January 28, 1992); Kritzan, U.S. Patent No. 5,080,698 (January 14, 1992); Hayes, U.S. Patent No. 5,076,817 (December 31, 1991); Arthur, U.S. Patent No. 5,073,176 (December 17, 1991);

Ube Industries, Ltd., Yamaguchi, Japan:
Makino, *et al.,* U.S. Patent No. 4,474,858 (October 2, 1984); Makino, *et al.*, U.S. Patent No. 4,460,526 (July 17, 1984); Makino, *et al.*, U.S. Patent No. 4,378,400 (March 29, 1983; Makino, *et al.,* U.S. Patent No. 4,370,290 (January 25, 1983);

The Dow Chemical Company, Midland, Michigan, USA:
Mahon, U.S. Patent No. 3,228,876 (January 11, 1966); Mahon, U.S. Patent No. 3,228,877 (January 11, 1966); McLain, U.S. Patent No. 3,422,008 (January 14, 1969); Caskey, *et al.,* U.S. Patent No. 4,929,259 (May 29, 1990); Caskey, *et al.,* U.S. Patent No. 4,961,760 (October 9, 1990); Edwards, *et al.,* U.S. Patent No. 5.013,331 (May 7, 1991); Trimmer, *et al.,* U.S. Patent No. 5,013,437 (May 7, 1991); Trimmer, U.S. Patent No. 5,211,728 (May 18, 1993).
The relevant portions of each of these patents are incorporated herein by reference for all legal purposes which may be served thereby.

The membranes used in the present invention make assume a variety of configurations and dimensions. The most prominent examples are hollow fibers and flat sheets. Hollow fiber membranes, particularly when contained in modules containing large numbers of such fibers (generally on the order of millions) arranged in parallel, are particularly useful.

Preferred membrane materials are bisphenol polycarbonates. Preferred bisphenol polycarbonates are those represented by the following formula

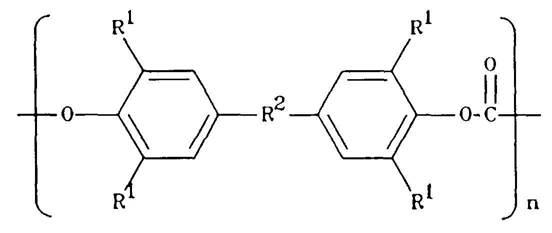

In these polymers, the R¹ groups are either the same or different within any single bisphenol subunit (the bracketed portion of the formula) and similarly either the same or different among different bisphenol subunits in a single polymeric chain or among different polymeric chains. Likewise, the R² units are either the same or different among different bisphenol subunits in a single polymeric chain or among different polymeric chains. The R¹ groups are defined as H, Cl, Br, or C₁-C₄ alkyl. The R² groups are defined as carbonyl (-C(O)-), thio (-S-), sulfonyl (-SO₂-), oxy (-O-), a C₁-C₆ divalent hydrocarbon radical, a C₁-C₆ divalent halo-substituted hydrocarbon radical, or an inertly substituted C₁-C₆ divalent hydrocarbon radical. Within these definitions, "halo-substituted" is preferably fluoro-, chloro- or bromo-substituted, and "inertly substituted" is preferably (C₁-C₃ alkoxy)-substituted, (C₁-C₃ alkylthio)-substituted, or hydroxy-substituted. The index n is a positive integer such that the polymer has sufficient molecular weight to prepare a membrane with suitable characteristics as a gas separation membrane. In preferred polymers of this formula, the number average molecular weight is about 50,000 or greater, more preferably about 100,000 or greater, and most preferably within the range of about 100,000 to about 300,000. In terms of the value of n, preferred polymers are those in which n has a number average of 50 or greater, more preferably 100 or greater, and most preferably within the range of 100 to 1,000.

It is further preferred that at least 25 weight percent of the bisphenol subunits in the polymer as a whole bear R¹ groups which are exclusively Br, Cl or mixtures of Br and Cl. More preferred polymers are those in which at least 35 weight percent of the bisphenol subunits bear R¹ groups which are exclusively Br, Cl or mixtures of Br and Cl. Still more preferred are those in which at least 50% are exclusively Br, Cl, or mixtures of the two, and still more preferred are those in which at least 75% are exclusively Br, Cl, or mixtures of the two. Still more preferred are polymers in which the R¹ groups are all either Br, Cl, or mixtures of the two. For polymers prepared from tetrachlorobisphenols or tetrabromobisphenols, it is preferred that the R¹ groups are all Cl or all Br, respectively, in at least about 90 weight percent of the bisphenol subunits, more preferably in at least about 95 percent by weight, and most preferably in substantially all of the bisphenol subunits. Polymers prepared from tetrabromobisphenols are the most preferred. When R' groups which are not halogens are included, preferred such groups are H and methyl.

Preferred groups for R² are C₁-C₆ divalent hydrocarbon radicals, particularly C₁-C₆ alkylidene (saturated hydrocarbon) radicals, with isopropylidene (-C(CH₃)₂-) the most preferred.

Preferred bisphenol subunits within the formula are those prepared from the following bisphenols: 2,2-bis(3,5-bromo-4-hydroxyphenyl)propane and 2,2-bis(3,5-chloro-4-hydroxyphenyl)propane. Of these, 2,2-bis(3,5-bromo-4-hydroxyphenyl)propane is the most preferred.

The preparation of bisphenol polycarbonates is known in the polymer industry. Any of several conventional processes may be used.

One method of preparation is the direct reaction method in which phosgene is reacted with a bisphenol appropriately substituted with the substituents of the desired polymer product to produce the polymer in solution. The reaction can be conducted in solution with a polymer solvent such as methylene chloride and an acid acceptor such as pyridine. The polymer is then recovered as an organic solution after multiple aqueous washes to remove excess acid acceptor and the reaction by-product which is the hydrochloride of the acid acceptor. A modified version of this method is one in which the bisphenol and 1-3 mole percent of the corresponding monofunctional phenol are dissolved or slurried in aqueous sodium hydroxide. The polymer solvent is then added, together with a catalytic quantity of a tertiary amine, and the resulting mixture is rapidly stirred while phosgene gas is added. Upon completion of the reaction, the phases are separated and the polymer solution is washed with water and extracted with acid to remove the catalyst.

Another method is transesterification. According to this method, phosgene is reacted with an appropriately substituted phenol to produce the corresponding diphenyl carbonate by passing the phosgene through an aqueous caustic solution of the phenol or by using a two-phase reaction medium as in the modified version of the direct reaction method. In either case, the crude diphenyl carbonate is purified by extraction with dilute base to hydrolyze and remove residual phenyl chloroformates, followed by distillation. Polymerization is then performed by combining the diphenyl carbonate with an appropriately substituted bisphenol in the presence of a basic catalyst such as calcium acetate or sodium, potassium or lithium carbonate under appropriate polymerization conditions.

Polymer resulting from either of these manufacturing methods is formed into membranes by methods known to those skilled in the art. Typically, the polymer is combined with a liquid solvent and a liquid non-solvent to form a mixture, which is then heated to form a homogeneous extrudable fluid. The fluid is then extruded into the configuration desired for the membrane, and passed through a quench zone in which the membrane is contacted with a liquid having a very low solubility for the polymer, to remove most of the solvent and non-solvent. Liquids useful as solvents include glycol ethers, dialkyl ketones, substituted morpholines, pyrrolidinones and substituted benzenes. A particularly preferred solvent is N-methylpyrrolidone. The non-solvent is a liquid which does not dissolve the polymer to any significant degree at extrusion temperatures and which thereby aids in the formation of the pores in the finished polymer. Liquids useful as non-solvents include glycols and glycol ethers, esters, alkanols, cyclohexanes, alkanes, dialkyl ketones, amides, nitriles and aldehydes. Particularly preferred non-solvents are triethylene glycol and polyethylene glycols with molecular weights up to about 400. The spin composition (extrusion mixture) generally contains from about 30% to about 60% by weight of the polymer, and preferably from about 50% to about 55% by weight. The weight ratio of solvent to nonsolvent is preferably between about 2.0 and about 2.4. Methylene chloride is frequently included as a further solubilizing agent.

While the membrane can assume any of a wide variety of configurations, including flat sheets, hollow tubes and hollow fibers, the most preferred configuration is that of hollow fibers. The fiber shape is imparted to the membrane in the extrusion stage as indicated above. During the quench stage, the fiber is prevented from collapsing by passing a core fluid through the hollow core of the fiber. The quench stage consists of an air quench zone followed by a liquid quench zone, the core fluid being applied in the air quench zone. The core fluid is generally a gas such as air, nitrogen or argon, and is applied at a pressure of about 0.1 to about 0.5 inches of water. The liquid quench zone uses a low-solubility liquid, preferably water. The membrane may be dried by exposure to flowing air or an inert gas at a temperature between about 20°C and about 80°C.

Preferred hollow fibers for use in this invention are those having an outside diameter of from about 50 microns to about 400 microns, more preferably from about 75 microns to about 250 microns. The outer-to-inner diameter ratio is preferably between about 1.15 and about 2.5, more preferably between about 1.25 and about 1.70. The separation factor for oxygen and nitrogen at 30°C is preferably about 3.0 or greater, most preferably about 5.0 or greater, with about 7.0 particularly preferred. The gas permeability for oxygen is preferably at least about 0.5 Barrers, most preferably at least about 4.0 Barrers. Preferred membranes also have a flux of about 3.0 × 10⁻⁶ sec/cm²-(cm Hg)-sec or greater, more preferably about 8.0 × 10⁻⁶ sec/cm²-(cm Hg)-sec or greater, still more preferably at least about 10.0 × 10⁻⁶ sec/cm²-(cm Hg)-sec or greater, still more preferably at least about 15.0 × 10⁻⁶ sec/cm²-(cm Hg)-sec or greater, and most preferably within the range of about 15.0 × 10⁻⁶ to about 100.0 × 10⁻⁶ sec/cm²-(cm Hg)-sec.

Hollow fibers suitable for use in the present invention and the polymers from which they are made are disclosed in Sanders, Jr., *et al.,* U.S. Patent No. 4,772,392 (September 20, 1988); Anand, *et al.,* U.S. Patent No. 4,818,254 (April 4, 1989); Anand, *et al.,* U.S. Patent No. 4,840,646 (June 20, 1989); Jeanes, U.S. Patent No. 4,851,014 (July 25, 1989); Jeanes, U.S. Patent No. 4,874,401 (October 17, 1989); Sanders, *et al.,* U.S. Patent No. 4,955,993 (September 11, 1990); and Trimmer, U.S. Patent No. 5,211,728 (May 18, 1993). The relevant portions of each of these patents are incorporated herein by reference for all legal purposes which may be served thereby.

Hollow fibers of the type described above are generally used in modules in which the fibers are arranged in a bundle encased in a vessel which directs an incoming air stream either through or around the fiber lumens and separates the oxygen-rich permeate passing through the fiber walls from the oxygen-depleted by-product (remainder) stream in separate exit ports. Modules directing incoming air into the fiber lumens are referred to as boreside feed modules, while those directing incoming air to the exterior of the fibers are referred to as shellside feed modules.

In either case, the modules are preferably used with inlet pressures ranging from about 40 psia (276 kPa) to about 1000 psia (6900 kPa), more preferably from about 80 psia (551 kPa) to about 160 psia (1002 kPa). The pressure differential across the fiber membranes will vary with the membrane density and with the inlet pressure, but will preferably be between about 40 psia (276 kPa) and about 1000 psia (6900 kPa), and more preferably between about 95 psia (655 kPa) to about 160 psia (1002 kPa). The delivery pressure on the permeate side of the membranes will be selected in accordance with the desired pressure in the combustion furnace to which the permeate is directed. In general, however, the delivery pressure will range from about 30 kPag (131 kPa, 19 psia) to about 300 kPag (401 kPa, 57 psia), preferably from about 75 kPag (176 kPa, 25 psia) to about 150 kPag (251 kPa, 36 psia). The total active surface area of the fibers in the bundle will range from about 30 to about 3000 square meters, preferably from about 100 to about 1000 square meters. The abbreviation "psia" denotes pounds per square inch absolute; "kPa" denotes kilopascals; and "kPag" denotes kilopascals gauge (in excess of atmospheric).

Individual modules will generally deliver an oxygen-rich stream at a rate of from about 1000 SCFH (standard cubic feet per hour) (28 cubic meters per hour under standard conditions) to about 10,000 SCFH (280 cubic meters per hour under standard conditions), preferably from about 3,000 SCFH (84 m³/h) to about 5,000 SCFH (140 m³/h). In further preferred embodiments of the invention, a sufficient number of modules will be used in parallel to generate a total of from about 7,200 SCFH (200 m³/h) to about 360,000 SCFH (10,000 m³/h), more preferably from about 18,000 SCFH (500 m³/h) to about 72,000 SCFH (2,000 m³/h).

The oxygen-rich permeate will vary in oxygen content depending on the quality of the membranes and the throughput rate. In most cases, the permeate will have an oxygen content of at least about 30 mole percent, preferably at least about 40 mole percent, and most preferably between about 40 mole percent and about 60 mole percent. In embodiments of the invention where a nitrogen-rich stream is drawn from the modules for any of various uses in which an inert gas is desirable, the portion of the air stream remaining after the permeate is removed can be passed through one or more further banks of modules to achieve higher concentrations of nitrogen. The final nitrogen concentration may thus be about 90 mole percent or greater, preferably about 95 mole percent or greater, and in some cases about 99 mole percent or greater. A two-bank staged system can for example achieve about 85 mole percent or greater in the first bank and about 95 mole percent or greater overall, and preferably about 90% or greater in the first bank and about 99 mole percent or greater in the second bank. The nitrogen-rich stream is not only oxygen-depleted but also relatively dry, since the membranes can be selected to pass water preferentially relative to nitrogen in addition to passing oxygen preferentially. This produces a nitrogen-enriched stream which is particularly useful for applications where moisture is sought to be avoided.

Modules suitable for use in the present invention are disclosed in Mahon, U.S. Patent No. 3,228,876 (January 11, 1966); Mahon, U.S. Patent No. 3,228,877 (January 11, 1966); McLain, U.S. Patent No. 3,422,008 (January 14, 1969); Caskey, *et al.,* U.S. Patent No. 4,929,259 (May 29, 1990); Caskey, *et al.,* U.S. Patent No. 4,961,760 (October 9, 1990); Edwards, *et al.,* U.S. Patent No. 5,013,331 (May 7, 1991); Trimmer, *et al.,* U.S. Patent No. 5,013,437 (May 7, 1991); and Trimmer, U.S. Patent No. 5,211,728 (May 18, 1993). The relevant portions of each of these patents are incorporated herein by reference for all legal purposes which may be served thereby.

Sulfur recovery plants to which the present invention is applicable include any conventional plant designed for the Claus process, or any of the various modifications, in use or in the published literature. of the Claus process which have been developed to accommodate the use of enriched oxygen in place of air. In its most conventional form, the sulfur recovery plant will include a combustion stage, one or more catalytic converters, and a tail gas cleanup unit. The plant further contains one or more condensers to remove elemental sulfur between the various stages and reheaters when needed to raise the temperature high enough for a suitable catalytic reaction and to avoid deposition of sulfur on the catalyst surface. The combustion stage is performed in a furnace without catalyst, while the converters contain a conventional catalyst such as activated alumina. Heat generated by the furnace is used to generate steam in a waste heat boiler or otherwise recovered in a heat exchange unit. In certain variations of the process, the catalytic converters are eliminated and the reaction is conducted solely in one or more combustion furnaces.

The use of oxygen-rich air in place of, or as an additive to, atmospheric air in a conventional Claus plant can result in a furnace temperature considerably higher than that encountered in a Claus plant. With a sufficiently high oxygen concentration, the temperature is so high that it risks damage to the refractory lining of the furnace and exceeds the capacity of the waste heat boiler at the furnace exit. Risks also exist upstream of the furnace where burn-back can occur in the air feed pipe. At oxygen concentrations above about 27 mole percent, for example, the piping must be of a material which will not burn, such as Monel or other high-temperature alloys rather than metals such as carbon steel.

One means of ameliorating these risks is to split the oxygen-rich stream between two or more feed points along the reaction path. Watson (The BOC Group plc), U.S. Patent No. 5,294,428 (March 15, 1994), discloses the splitting of an oxygen stream between two furnaces connected in series such that only a limited proportion of the H₂S is oxidized in the first furnace (well below the stoichiometric one-third according to the principal reactions of the Claus process), allowing the unreacted H₂S to pass through the first furnace into the second where the remainder of the oxygen is introduced to complete the conversion. A similar disclosure hy the same inventor is found iii U.S. Patent No. 5,352,433 (October 4, 1994). European Patent Application Publication No. 0 328 820 A2 of the same inventor (published August 23, 1989) discloses a split-stream process where the oxygen feed is split among three or more combustion stages and the temperature is raised prior to the third combustion stage by heat exchange with the combustion gases from the first stage and by the introduction of fresh acid gas. Further split-stream processes are disclosed by Szekely, U.S. Patent No. 5,139,765 (August 18, 1992), Hujsak, *et al.,* U.S. Patent No. 3,681,024 (August 1, 1972), and Venemark, U.S. Patent No. 3,331,733 (July 18, 1967). The relevant portions of each of these patents are incorporated herein by reference for all legal purposes which may be served thereby.

Another means of lessening the risks associated with enriched oxygen usage is to dilute the furnace feed with a gas stream recycled from a point downstream along the reaction path or from another process in the same location. In European Patent Specification Publication No. 0 290 286 B1 (publication of grant August 5, 1992), Watson discloses a process involving the simultaneous treatment of amine gas and sour water stripper gas using two combustion regions, the amine gas combustion product mixture serving as a moderating gas to control the temperatures in both combustion regions. A recycle process in which a portion of the uncondensed gases from the condenser downstream of the waste heat boiler is recycled to the burner is disclosed by Goar, U.S. Patent No. 4,552,747 (November 12, 1989). Similar processes are disclosed by Gens, *et al.,* U.S. Patent No. 4,844,881 (July 4, 1989), and Pendergraft, *et al.,* U.S. Patent No. 4,756,900 (July 21, 1988). The relevant portions of each of these patents are incorporated herein by reference for all legal purposes which may be served thereby.

The relevant portions of each of the patents and published patent applications in the last two paragraphs is incorporated herein by reference for all legal purposes which may be served thereby.

The oxygen-enriched stream generated by the membranes can also be introduced at other points in a Claus process. In Claus processes which use acid gas-fired or fuel-fired reheaters between the condensers and the catalytic converters, for example, portions of the oxygen-enriched stream can be introduced to the reheaters.

The oxygen-enriched stream can also be used in Claus tail gas cleanup units. In the Lucas tail gas process, for example, the tail gas is incinerated, then treated with hot coke. Sulfur dioxide is removed from the gas leaving the coke bed and recycled to the Claus process. In the Westvaco process, the tail gas is incinerated, then diluted and the SO₂ adsorbed in a fluidized bed adsorber. In the Société Nationale des Pétroles d'Aquitaine (SNPA)/Haldor Topsöe process, all sulfur compounds are incinerated to SO₂, then cooled and passed over a vanadium catalyst to give SO₃, then concentrated and adsorbed to give sulfuric acid. The Shell flue-gas desulfurization process involves incineration of the tail gas, which is then passed over copper oxide on alumina to adsorb SO₂, then desorbed by a hot reducing gas. In the Shell Claus Offgas Treating ("SCOT") process of Shell Internationale Petroleum Maatschappij BV, the tail gas is heated, then reduced over a cobalt-molybdenum catalyst. The H₂S in the reduced gas is then absorbed in aqueous amine, such as diisopropanolamine or methyldiethanolamine, which is then heated to release the H₂S for recycle to the Claus unit. In the Davy Powergas/Wellman-Lord process, the tail gas is incinerated, quenched and fed to an absorber where it is scrubbed with sodium sulfite to form sodium bisulfite, followed by evaporation to yield SO₂ which is returned to the Claus process. In each of these processes, the incineration stage or heating stage can be enhanced by the oxygen-enriched stream.

As indicated above. the invention extends to a wide range of embodiments, varying in flow arrangements, reaction sequences, degrees of oxygen enrichment, points of introduction of the oxygen-enriched stream, and reaction and operating conditions. For a further understanding of the invention, however, a few specific plant schemes are described below in detail with reference to the drawings.

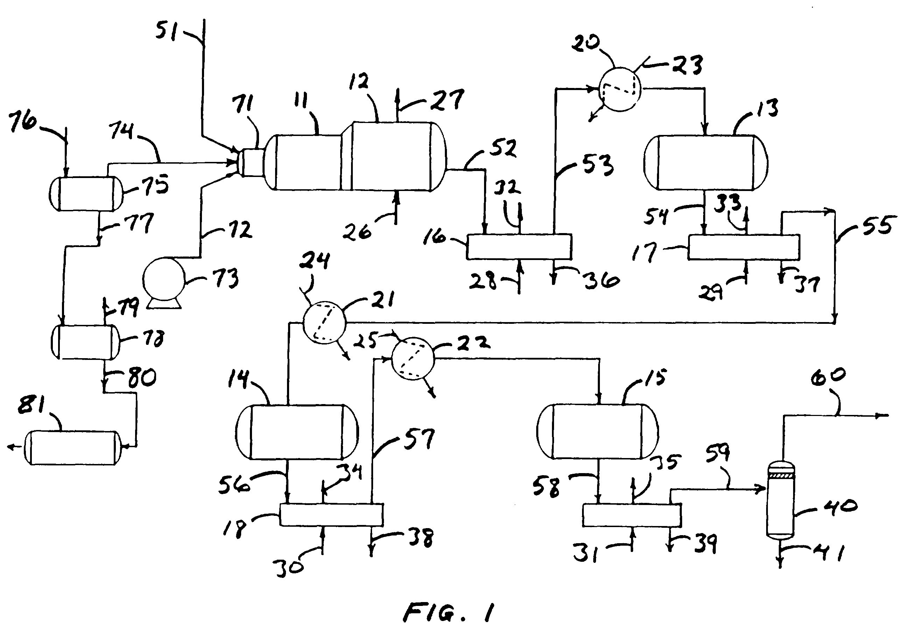

FIG. **1** depicts a Claus sulfur recovery unit whose essential elements are a reaction furnace **11** with associated waste heat boiler **12**, three catalytic reactors **13**, **14**, **15**, and four condensers **16**, **17**, **18**, **19**, one at the outlet of the waste heat boiler and each of the catalytic reactors. At the inlets of the catalytic reactors are reheaters **20**, **21**, **22** fed by high-pressure steam **23**, **24**, **25**. The waste heat boiler converts boiler feed water **26** to high-pressure steam **27**. The condensers convert boiler feed water **28**, **29**, **30**, **31** to low-pressure steam **32**, **33**, **34**, **35**, and liquid sulfur **36**, **37**, **38**, **39** is drawn from each condenser. Downstream of the final condenser **19** is a coalescer **40**, which is a centrifugal separator coalescing droplets of liquid sulfur to be drawn off as a further liquid sulfur stream **41**.

The acid gas or other hydrogen sulfide-containing gas **51** to be treated in this plant thus enters the plant at the reaction furnace **11** and passes through the waste heat boiler **12** to emerge as a partially converted intermediate product stream **52** from which elemental sulfur is condensed to leave a first condenser effluent **53** which upon reheating enters the first catalytic reactor **13** to emerge as a further converted intermediate product stream **54**. Condensation of elemental sulfur from the latter leaves a second condenser effluent **55** which upon reheating enters the second catalytic reactor **14** to emerge as a still further intermediate product stream **56**. Condensation of elemental sulfur from this third intermediate product stream leaves a third condenser effluent **57** which upon reheating enters the third catalytic reactor **15** to emerge as thee final product mixture **58**. The effluent **59** from last condenser **19** upon passing through the coalescer **40** produces a tail gas **60** which is free of elemental sulfur. The tail gas can then be fed to a tail gas cleanup unit if necessary to meet environmental requirements.

The reaction furnace **11** is fired by a burner **71** to which atmospheric air **72** is supplied by a blower **73**. The atmospheric air is supplemented by oxygen-enriched air **74** from a membrane system.

The membrane system includes a module **75** of hollow fiber membranes, or a bank of such modules in parallel, fed by pressurized air **76**. The oxygen-enriched air **74** is the permeate from the hollow fiber membranes. The remainder **77** which contains a high proportion of nitrogen is useful itself as an instrument gas, or is fed to a second module **78** or bank of modules from which a second permeate **79** is drawn. The remainder **80** from this second module has a higher proportion of nitrogen than the stream emerging from the first module, and is also useful as instrument gas or as an inert gas for reaction systems or storage or transport systems in general requiring an inert atmosphere. Included among the various uses of this high-nitrogen gas are:
food industry applications, such as the storage of produce in a controlled atmosphere, packaging of foods in a modified atmosphere, and use as a non-chemical fumigant;
chemical manufacturing applications, such as tank blanketing, pressure transfer, the sparging of paint and edible oil, and inert atmospheres in general;
heat treating applications, such as carburizing and brazing; oil and gas processing applications, such as drilling, well maintenance, fracturing, and methane recovery;
electronics manufacturing, such as in-process storage, clean room storage, and dry, clean packaging; and
instrument gas and/or inert gas for reaction systems in general, particularly petroleum refinery operations and prevent of flashing of molten sulfur.
The high-nitrogen gas can be used on site or placed in cylinders or tank cars for shipment and use elsewhere. FIG. **1** shows one means of using the high-nitrogen gas **80**, to purge a vessel **81** to create an inert, dry atmosphere inside the vessel. The vessel can be a reaction vessel, a storage vessel, or packaging of various kinds.

As an alternative to the arrangement shown in FIG. **1**, the oxygen-enriched stream **74** can be combined with the atmospheric air **72** from the blower upstream of the burner **71**, and the two fed to the burner as a single combined stream. For relatively low-level oxygen enrichment (less than about **27** mole percent oxygen), the two streams **72**, **74** can be safely combined in a typical blower outlet pipe of carbon steel without risk of damage to the pipe by burn-back (flames or high heat extending backward from the burner). For higher levels of oxygen enrichment, the oxygen-enriched stream **74** from the membrane is preferably fed separately to the burner **71** through piping of an alloy which can withstand the high burn-back temperatures, as explained above.

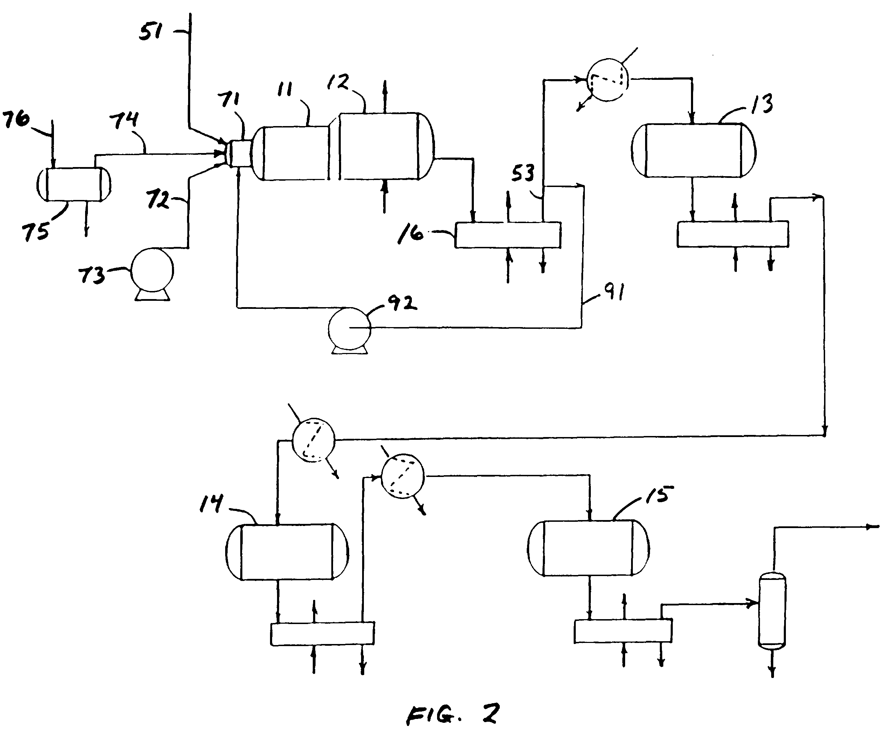

The process scheme shown in FIG. **2** is similar to that of FIG. **1**, with all of the units of FIG. **1** plus a recycle stream **91** drawing a portion of the effluent **53** from the first condenser through a recycle blower **92** to the burner **71**. The recycle stream dilutes the oxygen content of the gas mixture passing through the reaction furnace **11** to maintain the furnace temperature within limits which will not damage the burner or the waste heat boiler **12**. The recycle stream accomplishes this however without requiring a large volume of inert gas passing through the entire system, and without affecting the concentrations of reactive species in the catalytic converters **13**, **14**, **15**. The recycle permits the use of a higher proportion of membrane permeate **74** in the air mixture (the permeate **74** plus the blower air **72**) entering the furnace.

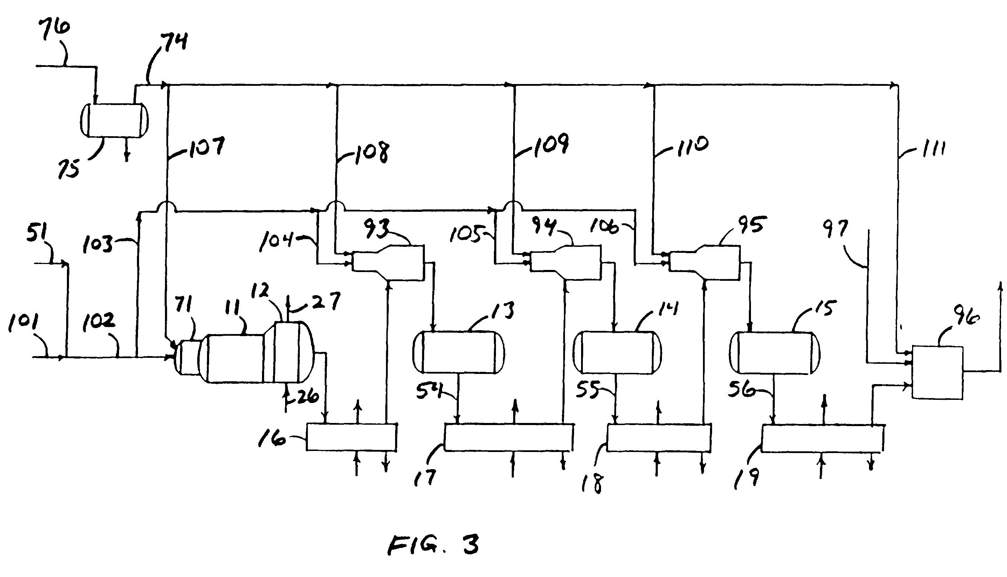

The process scheme shown in FIG. **3** contains several of the same units as that of FIGS. **1** and **2**, notably the burner **71**, reaction furnace **11**, waste heat boiler **12**, catalytic converters **13**, **14**, **15**, condensers **16**, **17**, **18**, **19**, and membrane module **75**. The high-pressure steam-fed reheaters of FIGS. **1** and **2** are replaced by acid-gas-fired reheaters **93**, **94**, **95** which are supplied with oxygen-enriched air from the membrane module **75**, and uncondensed gases leaving the last condenser **19** are incinerated in an incinerator **96** fueled by fuel gas **97**. In this process. acid gas **51** to be treated is combined with fuel gas **101** and fed as a combined stream **102** to the burner **71**. A portion **103** of the combined stream is drawn off and split into three subportions **104**, **105**, **106**, fed to the three reheaters **93**, **94**, **95**, respectively. The oxygen-enriched membrane permeate **74** is divided into five portions **107**, **108**, **109**, **110**, **111**, fed to the burner **71**, the three reheaters **93**, **94**, **95**, and the incinerator **96**, respectively. In alternatives to the scheme shown in this figure, the reheaters can be fueled solely by the acid gas **51** or solely by the fuel gas **101**.

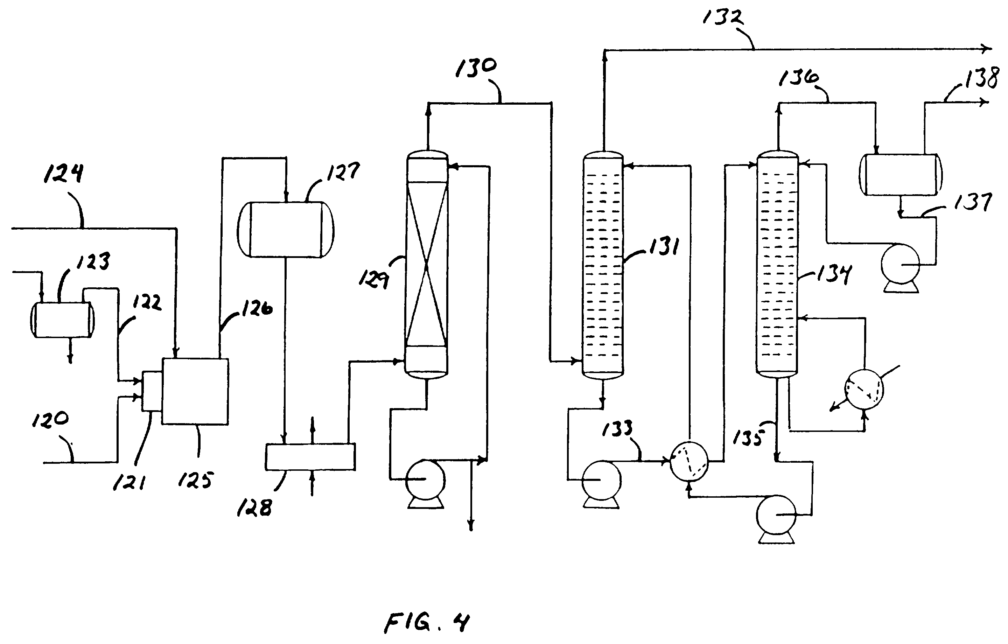

FIG. **4** shows a SCOT tail gas cleanup unit designed for use at the effluent of a Claus plant, with oxygen-enriched gas from a membrane module fed directly to the cleanup unit. Fuel **120** is incinerated in a burner **121** with a substoichiometric amount of oxygen in an oxygen-enriched permeate **122** from a membrane module **123**, resulting in a reducing gas as the combustion gas. Tail gas **124** is introduced to the incinerator chamber **125** where it is heated by the combustion gas from the burner **121**. The heated gas **126** emerging from the chamber is thus a mixture of the reducing gas and the heated tail gas. This mixture is passed through a catalytic reactor **127** containing a cobalt-molybdenum catalyst supported on alumina, in which all sulfur-containing compounds are reduced to hydrogen sulfide. The product mixture emerging from this reactor is cooled in a waste heat exchanger **128** and quenched in a quench tower **129**. The quenched gases **130** are absorbed in aqueous amine (which is typically diisopropanolamine or methyldiethanolamine) in an absorber **131** which removes the hydrogen sulfide, and a sulfur-free gaseous effluent **132** is passed to an incinerator stack. The rich amine solution **133** is passed to a stripper **134** which regenerates the amine **135**, and releases hydrogen sulfide gas **136**, which after the removal of condensibles **137** is recycled **138** to the Claus plant. With the exception of the membrane module **125**, the components of this cleanup unit are conventional and are shown as they appear in a typical SCOT unit.

The foregoing is offered primarily for purposes of illustration. It will be readily apparent to those skilled in the art that the types and arrangements of individual units in each plant scheme, the compositions of the streams, the operating conditions, and other parameters of the systems described herein may be further modified or substituted in various ways without departing from the spirit and scope of the invention.

## Claims

1. A process for the recovery of sulfur from an acid gas stream (51) containing hydrogen sulfide, comprising :
(a) passing air (76) through a gas separation membrane system (75) which preferentially passes oxygen relative to nitrogen, to obtain a permeate (74) containing oxygen at a concentration substantially in excess of 21 mole percent ;
(b) combusting the acid gas stream (51) with the permeate (74) to convert a portion of the hydrogen sulfide therein to sulfur dioxide, and reacting the sulfur dioxide thus formed with a further portion of the hydrogen sulfide to form a product gas (52, 54, 56, 58) containing gaseous elemental sulfur ; and
(c) condensing the gaseous elemental sulfur to liquid sulfur and recovering the liquid sulfur, leaving said product gas (60) substantially free of sulfur.

2. A process in accordance with claim **1** in which the gas separation membrane system (75) is comprised of a plurality of hollow fiber membranes of bisphenol polycarbonate.

3. A process in accordance with claim **2** in which the bisphenol polycarbonate is a polymer containing n subunits of the formula 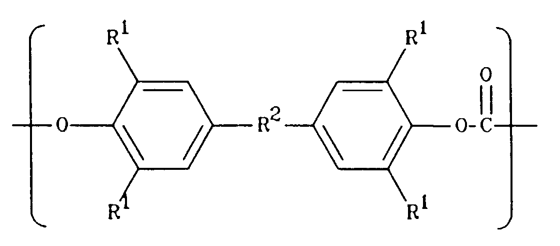 in which :
the R¹ groups are the same or different throughout the bisphenol polycarbonate and are independently selected from the group consisting of H, Cl, Br, and C₁-C₄ alkyl ;
the R² groups are the same or different throughout the bisphenol polycarbonate and are independently selected from the group consisting of carbonyl, thio, sulfonyl, oxy, C₁-C₆ divalent hydrocarbon radicals, C₁-C₆ divalent halo-substituted hydrocarbon radicals, and inertly substituted C₁-C₆ divalent hydrocarbon radicals ; and
n is an integer sufficiently large to provide the bisphenol polycarbonate with a molecular weight of at least about 50,000.

4. A process in accordance with claim **3** in which in at least 50 % of the subunits all R¹ groups are selected from the group consisting of Br and Cl.

5. A process in accordance with claim **3** in which all R¹ groups in the polymer are selected from the group consisting of Br and Cl.

6. A process in accordance with claim **3** in which all R¹ groups in the polymer are Br.

7. A process in accordance with claim **3** in which all R² groups in the polymer are C₁-C₆ divalent hydrocarbon radicals.

8. A process in accordance with claim **3** in which all R² groups in the polymer are C₁-C₆ alkylidene radicals.

9. A process in accordance with claim **3** in which all R² groups in the polymer are isopropylidene.

10. A process in accordance with claim **3** in which all R¹ groups in the polymer are Br, all R² groups in the polymer are isopropylidene, and n has a number average ranging from about 100 to about 1000.

11. A process in accordance with claim **1** in which the permeate (74) contains at least about 30 mole percent oxygen.

12. A process in accordance with claim **2** in which the hollow fiber membranes are retained in at least one module (75) containing a plurality of hollow fiber membranes and delivering the permeate (74) at a pressure of about 30 kPag to about 300 kPag and a volumetric rate of about 30 m³/h to about 300 m³/h.

13. A process in accordance with claim **12** in which the permeate (74) contains from about 35 mole percent to about 65 mole percent oxygen, and the hollow fiber membranes are retained in a plurality of the modules (75), sufficient in number to produce from about 200 m³/h to about 10,000 m³/h of the permeate (74).

14. A process in accordance with claim **12** in which the permeate (74) contains from about 40 mole percent to about 60 mole percent oxygen, and the hollow fiber membranes are retained in a plurality of the modules (75) sufficient in number to generate from about 500 m³/h to about 2,000 m³/h of the permeate (74) at a pressure of about 75 kPag to about 150 kPag.

15. A process in accordance with claim **1** in which (b) comprises :
(i) combusting the acid gas stream (51) with the permeate (74) in a furnace (11) to form an intermediate product stream (52, 54, 56) ;
(it) passing the intermediate product stream (52, 54, 56) through at least one catalytic reaction zone (13, 14, 15) to convert substantially all remaining sulfur compounds to elemental sulfur ; and
(iii) removing elemental sulfur from the intermediate product stream (52, 54, 56) by condensation before each catalytic reaction zone (13, 14, 15).

16. A process in accordance with claim **15** in which (i) comprises combusting the acid gas stream (51) in a furnace (11) at a temperature not exceeding about 1600°C.

17. A process in accordance with claim **1** in which (b) comprises :
(i) combusting the acid gas stream (51) with the permeate (74) in a furnace (11) to form an intermediate product stream (52, 54, 56) ;
(it) removing elemental sulfur from the intermediate product stream (52, 54, 56) by condensation to leave a gaseous effluent ;
(iii) recycling a portion of the gaseous effluent to the furnace (11) ; and
(iv) passing a further portion of the gaseous effluent through at least one catalytic reaction zone (13, 14, 15) to convert substantially all remaining sulfur compounds to elemental sulfur.

18. A process for converting sulfur compounds in a Claus tail gas (124) to hydrogen sulfide for recycling to a Claus sulfur recovery unit, comprising :
(a) passing air through a gas separation membrane system (123) which preferentially passes oxygen relative to nitrogen, to obtain a permeate (122) containing at least about 30 mole percent oxygen ;
(b) combusting an excess of fuel gas (120) with the permeate to form a reducing gas, and combining the reducing gas with the Claus tail gas (124) to form a heated process gas (126) ;
(c) contacting the heated process gas with a catalyst (127) to convert sulfur compounds in the process gas to hydrogen sulfide ;
(d) absorbing hydrogen sulfide thus produced in an aqueous solution of a selective hydrogen sulfide absorbent (131) ; and
(e) recovering hydrogen sulfide (136) thus absorbed from the aqueous solution for recycle to the Claus sulfur recovery unit.

19. A process for the recovery of sulfur from an acid gas stream (51) containing hydrogen sulfide, comprising :
(a) passing air (76) through a gas separation membrane system (75) which preferentially passes oxygen relative to nitrogen, to obtain a permeate (74) containing at least about 30 mole percent oxygen ;
(b) combusting a portion of the acid gas stream (51) with a portion of the permeate (74) in a furnace (11) to form an intermediate product stream (52, 54, 56) ;
(c) passing the intermediate product stream (52, 54, 56) through at least one catalytic reaction zone (13, 14, 15) to convert substantially all remaining sulfur compounds to elemental sulfur ;
(d) removing elemental sulfur from the intermediate product stream (52, 54, 56) by condensation, and reheating the intermediate product stream (52, 54, 56) in a reheater (93, 94, 95) fired by a further portion of the acid gas stream (51) and a further portion of the permeate (74) before each catalytic reaction zone ; and
(e) recovering elemental sulfur thus condensed, leaving the product gas substantially free of sulfur (60).

20. A process for simultaneously recovering sulfur from an acid gas stream (51) containing hydrogen sulfide and filling a vessel (81) with a nitrogen-rich atmosphere containing nitrogen at a concentration substantially exceeding that of air, comprising :
(a) passing air (76) through a gas separation membrane system (75) which preferentially passes oxygen relative to nitrogen, to obtain a permeate (74) containing at least about 30 mole percent oxygen and a non-permeated remainder (77, 80) containing at least about 90 mole percent nitrogen ;
(b) recovering the non-permeated remainder (77, 80) for use as a nitrogen-rich gas stream ;
(c) combusting the acid gas stream (51) with the permeate (74) to convert a portion of the hydrogen sulfide therein to sulfur dioxide, and reacting the sulfur dioxide with a further portion of the hydrogen sulfide to form a product gas (52, 54, 56, 58) containing gaseous elemental sulfur ;
(d) condensing the gaseous elemental sulfur to liquid sulfur and recovering the liquid sulfur from the product gas, leaving the product gas substantially free of sulfur (60); and
(e) purging the vessel (81) with the non-permeated remainder (80).

21. A process in accordance with claim **20** in which
(a) comprises
(i) passing air (76) through a first bank of gas separation membranes (75) which preferentially pass oxygen relative to nitrogen, to obtain a first permeate (74) containing at least about 30 mole percent oxygen and a first non-permeated remainder (77) containing at least about 85 mole percent nitrogen, and
(it) passing the first non-permeated remainder (77) through a second bank of gas separation membranes (123) which preferentially pass oxygen relative to nitrogen, to separate from the first non-permeated remainder (77) a second permeate (79), leaving a second non-permeated remainder (80) containing at least about 95 % nitrogen ;
(b) comprises recovering the second non-permeated remainder (80) as a nitrogen-rich gas stream ;
and (c) comprises combusting the acid gas stream (51) with the first permeate (74).
